Europäisches Patentamt

European Patent Office

Office européen des brevets

(11) Veröffentlichungsnummer: **0 080 578**
A2

(12) **EUROPÄISCHE PATENTANMELDUNG**

(21) Anmeldenummer: 82109124.6

(22) Anmeldetag: 02.10.82

(51) Int. Cl.³: **B 60 C 15/02**

(30) Priorität: 26.11.81 DE 3146864

(43) Veröffentlichungstag der Anmeldung:
08.06.83 Patentblatt 83/23

(84) Benannte Vertragsstaaten:
AT BE CH DE FR GB IT LI LU NL SE

(71) Anmelder: Continental Gummi-Werke
Aktiengesellschaft
Königsworther Platz 1 Postfach 169
D-3000 Hannover 1(DE)

(72) Erfinder: Hartman, Jürgen, Dipl.-Ing
Ermighäuserweg 35
D-3540 Korbach(DE)

(54) Fahrzeugrad.

(57) Die Erfindung betrifft ein Fahrzeugrad bzw. einen Luftreifen für einspurige Fahrzeuge, die schlauchlos gefahren werden. Zur Erleichterung des Aufpumpens eines montierten Reifens wird vorgeschlagen, daß der auf der Felge montierte Reifen bereits im nicht aufgepumpten Zustand über seinen gesamten Umfang im Bereich seiner Wülste einen in Axialrichtung verlaufenden nach außen gerichteten Seitendruck erzeugt.

FIG.3

EP 0 080 578 A2

Croydon Printing Company Ltd

Beschreibung

Die Erfindung betrifft ein Fahrzeugrad für einspurige Fahrzeuge, mit einem Luftreifen aus Gummi oder gummiähnlichen Kunststoffen, der zwei Wülste mit darin eingebetteten Wulstkernen, eine in den Wulstkernen verankerte ein- oder mehrlagige Karkasse und eine luftdichte Gummischicht aufweist, weiterhin mit einer Felge, auf der der Reifen ohne Verwendung eines Schlauches luftdicht montierbar ist.

Bei bekannten Fahrzeugrädern dieser Art, die also schlauchlos ausgeführt sind, bestehen nicht unerhebliche Schwierigkeiten beim Aufpumpen, nachdem ein solcher Reifen auf der zugehörigen Felge aufgezogen worden ist. Besonders groß sind diese Schwierigkeiten in Situationen, in denen keine Preßluft, sondern lediglich eine Handluftpumpe zur Verfügung steht, wie es bei einer Panne mit einem Fahrrad oder Motorrad unterwegs oder bei einem Reifenwechsel zu Hause normalerweise der Fall ist. Die Schwierigkeiten resultieren vor allem daraus, daß ein aufgezogener Reifen sich seitlich nur abschnittweise an die Felge anlegt, während in größeren Abschnitten Luftzwischenräume erhalten bleiben, durch die beim Aufpumpen die von der Luftpumpe stammende Luft sofort wieder nach außen entweicht.

Der Erfindung liegt deshalb die Aufgabe zugrunde, Fahrzeugräder bzw. Reifen der eingangs genannten Art derart auszubilden, daß die geschilderten Schwierigkeiten, die seit langer Zeit bestehen, nicht mehr auftreten.

Diese Aufgabe wird erfindungsgemäß dadurch gelöst, daß der auf der Felge montierte Reifen bereits im nicht aufgepumpten Zustand im Bereich seiner Wülste über seinen gesamten Umfang einen in Axialrichtung verlaufenden nach außen gerichteten Seitendruck erzeugt.

Die Erfindung bietet den Vorteil, daß mit ihr die geschilderten Probleme auf einfachste Weise, d.h. ohne zusätzlichen Herstellungsaufwand an Reifen oder Felge und ohne zusätzlichen Montageaufwand ausgeräumt sind.

Selbst in einer Werkstatt, in der Preßluft vorhanden ist, ergibt sich beim Aufpumpen eines erfindungsgemäßen Reifens der Vorteil einer Einsparung von Preßluft, weil ein Reifen nicht mehr mit Hilfe von Preßluft an die Seitenteile der Felge angedrückt werden muß, so daß sämtliche Luft zum eigentlichen Füllen des Reifens zur Verfügung steht.

Nachfolgend wird die Erfindung in zwei Ausführungsbeispielen dargestellt und anhand einer Zeichnung erläutert.

Es zeigt

> Fig. 1 einen Luftreifen für einspurige Fahrzeuge, insbesondere Motorräder, mit einem etwa halbkreisförmigen Querschnitt,

> Fig. 2 einen Luftreifen für einspurige Fahrzeuge, der bei der Vulkanisation nahezu die Form eines Ringzylinders einnimmt, in einem radialen Teilschnitt,

> Fig. 3 ein Fahrzeugrad mit einem Reifen gemäß Fig. 1 oder Fig. 2 in einem radialen Teilschnitt.

Ein Reifenkörper 1 besteht im wesentlichen aus Gummi oder gummiähnlichen Kunststoffen. Eine Karkasse 2 aus in Cordlage angeordneten fadenförmigen Festigkeitsträgern ist in den Reifenwülsten 3 durch Umschlingen von dort befindlichen Stahldrahtkernen 4 verankert. Radial außen weist der Reifenkörper einen Laufstreifen 5 auf, unter dem gegebenenfalls ein Gürtel angeordnet sein kann. Radial innen befindet sich eine luftdichte Schicht 6. Bei der Karkasse 2 kann es sich je nach Anwendungsfall um eine Kreuzkarkasse oder eine Radialkarkasse handeln.

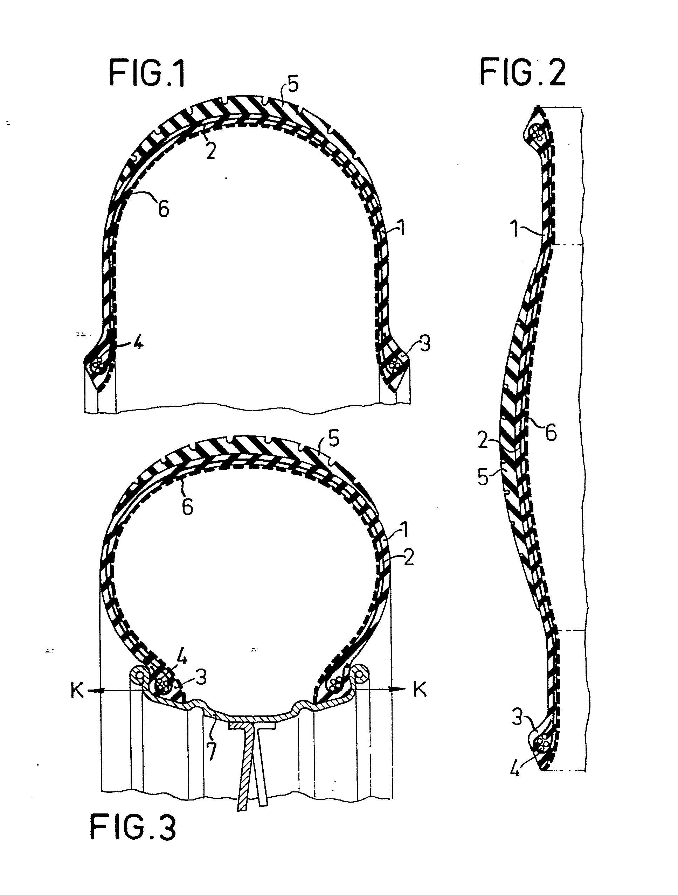

Der Reifen gemäß Fig. 1, der für ein Motorrad geeignet ist, ist in einer Vulkanisierform geheizt worden, deren Heizmaulweite wesentlich größer ist als die Maulweite der zu verwendenden Felge. Er weist nach der Vulkanisation einen etwa halbkreisförmigen Querschnitt auf, d.h. er ist im Bereich seiner Wülste 3 etwa genau so breit wie an seiner breitesten Stelle. Wird dieser Reifen an seinen Wülsten 3 in axialer Richtung zusammengedrückt, wird eine Kraft K aufgebaut, die bestrebt ist, die Wülste 3 axial nach außen zu bewegen.

Erfindungsgemäße Reifen können von dem im Beispiel 1 beschriebenen abweichen, und zwar bezüglich der axialen Abstände der Wülste sowohl nach oben als auch nach unten. Entscheidend ist, daß die Wülste 3 nach der Montage des Reifens auf einer Felge bereits im nicht aufgepumpten Zustand des Rades einen seitlich nach außen gerichteten Druck ausüben, so daß sie sich über ihren gesamten Umfang an der Felge anlegen. Ein möglichst großer Seitendruck läßt sich zum einen dadurch erzeugen, daß die Differenz zwischen der Maulweite der Vulkanisierform und der Felgenmaulweite möglichst groß gewählt wird, zum anderen dadurch, daß bei kleinerer Differenz durch einen steiferen inneren Aufbau des Reifens eine größere Rückstellkraft K erzeugt wird, die dann ebenfalls für ein sicheres Anliegen der Reifenwülste an der Radfelge im nicht aufgepumpten Zustand des Rades ausreicht.

In Fig. 2 ist ein Extremfall eines erfindungsgemäßen Reifens beschrieben, der zumindest für bestimmte Fahrradreifen in Frage kommt. Der Einfachheit halber wurden die Einzelteile des Reifens wie in Fig. 1 gewählt. Der wesentliche Unterschied zum Reifen nach Fig. 1 besteht darin, daß der Reifen bei der Vulkanisation im wesentlichen die Form eines Ringzylinders aufweist, so daß er an seinen Wülsten 3 etwa den gleichen Durchmesser aufweist wie in seiner Mittelebene. Selbstverständlich muß dieser Reifen im mittleren Bereich ausreichend dehnbar sein, so daß er bei einem Zusammendrücken der Wülste 3 hier einen größeren Durchmesser annehmen kann.

In Fig. 3 ist ein Fahrzeugrad gezeichnet, bei dem auf einer Felge 7 für schlauchlose Reifen ein Reifen gemäß Fig. 1 oder Fig. 2 montiert ist. Es sollte darauf hingewiesen werden, daß die Fig. 1 bis 3 lediglich als Schemaskizzen aufzufassen sind, mit denen das erfindungsgemäße Prinzip verdeutlicht werden soll. Wird ein Reifen gemäß Fig. 1 oder Fig. 2 auf die in Fig. 3 gezeichnete Felge 7 aufgezogen, werden die Wülste in axialer Richtung zusammengedrückt, so daß sie eine Kraft K aufbauen, die bereits im nicht aufgepumpten Zustand des Rades einen in Axialrichtung verlaufenden nach außen gerichteten Seitendruck erzeugt. Dadurch legt sich der Reifen über seinen gesamten Umfang im Bereich der Wülste 3 zuverlässig an der Felge 7 an, so daß sich in diesem Bereich keinerlei Zwischenräume zwischen Reifenkörper 1 und Felge 7 ergeben. Dadurch ist es besonders leicht, den Reifen anschließend auf seinen Solldruck aufzupumpen, so daß dies sogar mit einer einfachen Handluftpumpe zu bewerkstelligen ist.

Hannover, den 12. November 1981
Sch/Fr            81-45 P/Sch

Ansprüche

1. Fahrzeugrad für einspurige Fahrzeuge, mit einem Luftreifen aus Gummi oder gummiähnlichen Kunststoffen, der zwei Wülste mit darin eingebetteten Wulstkernen, eine in den Wulstkernen verankerte ein- oder mehrlagige Karkasse und eine luftdichte Gummischicht aufweist, weiterhin mit einer Felge, auf der der Reifen ohne Verwendung eines Schlauches luftdicht montierbar ist, dadurch gekennzeichnet, daß der auf der Felge (7) montierte Reifen bereits im nicht aufgepumpten Zustand im Bereich seiner Wülste (3) über seinen gesamten Umfang einen in Axialrichtung verlaufenden, nach außen gerichteten Seitendruck erzeugt.

2. Reifen für ein Fahrzeugrad nach Anspruch 1, dadurch gekennzeichnet, daß der Reifen in einer Form vulkanisiert worden ist, deren Maulweite größer ist als die Maulweite der für den Reifen vorgesehenen Felge (7).

3. Reifen nach Anspruch 2, dadurch gekennzeichnet, daß er im Querschnitt etwa halbkreisförmig vulkanisiert worden ist.

4. Reifen nach Anspruch 2, dadurch gekennzeichnet, daß er im wesentlichen ringzylinderförmig vulkanisiert worden ist.

FIG.1

FIG.2

FIG.3